# EUROPÄISCHE PATENTSCHRIFT

(11) **EP 0 617 728 B1**
(45) Veröffentlichungstag und Bekanntmachung des Hinweises auf die Patenterteilung: **29.12.1997**
(21) Anmeldenummer: 93914584.3
(22) Anmeldetag: 19.07.1993
(51) Int. Cl.: C09J 113/00, C09J 157/10, C08C 19/36, C08F 8/32

(54) **BEI RAUMTEMPERATUR VERNETZBARE MASSEN, VERFAHREN ZU IHRER HERSTELLUNG UND IHRE VERWENDUNG**
COMPOSITIONS WHICH CAN BE CROSS-LINKED AT ROOM TEMPERATURE, METHOD OF PREPARING THEM AND THEIR USE
SUBSTANCES RETICULABLES A TEMPERATURE AMBIANTE, LEUR PROCEDE DE FABRICATION ET LEUR UTILISATION

(30) Priorität: 17.08.1992 CH 2553/92; 02.04.1993 CH 1010/93
(43) Veröffentlichungstag der Anmeldung: 05.10.1994
(73) Patentinhaber: Ciba Specialty Chemicals Holding Inc., 4057 Basel (CH)
(72) Erfinder: Abend, Thomas P., 9010 St. Gallen (CH)
(86) Internationale Anmeldenummer: CH9300182
(87) Internationale Veröffentlichungsnummer: WO9404624

(56) Entgegenhaltungen:
- EP-A- 0 149 354
- EP-A- 0 359 926

## Beschreibung

### Gegenstand der Erfindung:

Die Erfindung betrifft vernetzbare, zweikomponentige Massen gemäss Oberbegriff von Patentanspruch 1, Verfahren zu ihrer Herstellung und ihre Verwendung.

### Stand der Technik:

Flüssige Polymere oder Copolymere, welche Säureanhydridgruppen enthalten, sind wertvolle Rohstoffe für die Formulierung von reaktiven Klebstoffen, Dichtmassen, Beschichtungen und Vergussmassen. Die Säureanhydridgruppen können statistisch oder regelmässig über das Molekül verteilt sein, oder in endständiger Position. Die Einführung der Säureanhydridgruppen kann durch Copolymerisation, durch Umsetzung mit endständigen reaktiven Gruppen, durch nachfolgende Addition von ungesättigten Anhydriden an einzelne oder konjugierte Doppelbindungen oder durch Graftreaktionen erfolgen.

In EP 048 128 und DE 3 830 895 wurde vorgeschlagen, säureanhydridgruppenhaltige Polymere mit Polyhydroxylverbindungen zu vernetzen. Die Vernetzungsgeschwindigkeit kann mit der Zugabe von tertiären Aminen gesteuert werden. Die Festigkeit der mit Polyhydroxylverbindungen vernetzten anhydridhaltigen Polymeren, vor allem die niedere Einreissfestigkeit limitiert die Einsatzgebiete der vernetzten Massen.

Höhere Festigkeit der Vernetzungsprodukte erwartet man durch Umsetzung von säureanhydridgruppenhaltigen Polymeren mit Polyaminen. Di- oder Polyamine werden unter anderem in den Patentschriften EP 73 022 und EP 282 184 als Vernetzer vorgeschlagen. Polyamine reagieren ausserordentlich rasch mit säureanhydridgruppenhaltigen Polymeren, grössere Ansätze sind auf Grund der sehr kurzen Topfzeit nur mit Schwierigkeiten verarbeitbar. Zudem sind manche aliphatische und aromatische Amine toxikologisch bedenklich.

Um diesen Schwierigkeiten zu begegnen, werden höhermolekulare oder polymere Polyamine verwendet. Mit der Abnahme der Aminogruppenhäufigkeit sinkt gleichzeitig die Festigkeit der Vernetzungsprodukte.

In den Patentschriften DE 2 610 406, DE 2 853 477, EP 259 172 und EP 284 953 wurde vorgeschlagen, säureanhydridgruppenhaltige Polymere mit blockierten Polyaminen zu vernetzen. Blockierte Polyamine, welche Ketimin-, Aldimin- oder Oxazolangruppen enthalten, benötigen Feuchtigkeit oder Wasser, um die Amine freizusetzen. Bei der Umsetzung mit Wasser werden gleichzeitig Aldehyde oder Ketone frei, die aus dem Vernetzungsprodukt herausdiffundieren müssen. Daher eignen sich diese Vernetzungsmittel in der Praxis nur für dünne Schichten.

In der Patentschrift DE 2 758 222 wurde vorgeschlagen, die flüssigen anhydridhaltigen Polymere mit einem Komplex aus 4,4'-Diaminodiphenylmethan und Natriumchlorid zu vernetzen. Nachteilig ist, dass höhere Temperaturen zur Vernetzung verwendet werden müssen und dass das Endprodukt Kochsalz enthält, wodurch die Verwendung, vor allem aus Korrosionsschutzgründen, stark eingeschränkt ist.

Es besteht aber ein grosser Bedarf an bereits bei Raumtemperatur vernetzenden schwundfreien elastischen Massen für das Vergiessen, Dichten, Kleben, Beschichten, vor allem an solchen mit niederer Toxizität.

Es war die der Erfindung zugrundeliegende Aufgabe, neue, bei Raumbedingungen reagierende Vernetzungsmittel für flüssige, anhydridgruppenhaltige Polymere bereitzustellen, deren Vernetzungsprodukte durch wesentlich höhere mechanische Festigkeit, verbunden mit Einreiss- und Weiterreissfestigkeit, ausgezeichnet sind.

Diese Aufgabe wird durch die vernetzbare, zweikomponentige Masse gemäss Anspruch 1 und das Verfahren zu ihrer Herstellung gemäss Anspruch 13 gelöst. Sie wird insbesondere gelöst durch zweikomponentige Massen aus säureanhydridgruppenhaltigen Polymeren, die als Vernetzungsmittel sterisch gehinderte, aromatische Amine, Diamine oder Polyamine enthalten. Sterisch gehindert heisst, die Aminogruppe ist in den Nachbarstellungen oder ortho-Stellungen substituiert.

Als Substituenten eignen sich: Lineare oder verzweigte Alkylgruppen mit 1 bis 4 C-Atomen, wie Methyl-, Ethyl-, Propyl-, isoPropyl-, Butyl-, sec.Butyl-, tert.Butyl-gruppen.

Bevorzugt sind:
1,3,5-Trimethyl-2,4-diaminobenzol, 1-Methyl-3,5-diethyl-2,4-diaminobenzol, l-Methyl-3,5-diethyl-2,6-diaminobenzol, 1,3,5-Triethyl-2,4-diaminobenzol, 2,3,5,6-Tetramethyl-1,4- diaminobenzol, 3,3',5,5'-Tetramethyl-4,4'-diaminodiphenylmethan, 3,3',5,5'-Tetraethyl-4,4'-diaminodiphenylmethan, 3,3',5,5'-Tetraisopropyl-4,4'-diaminodiphenyl-methan, 3,3'-Dimethyl-5,5'-diethyl-4,4'-diaminodiphenylmethan, 3,3'-Dimethyl-5,5'-diisopropyl-4,4'-diaminodiphenylmethan, 3,3'-Diethyl-5,5'-diisopropyl-4,4'-diamino-diphenylmethan, in beiden Orthostellungen zu den Amingruppen alkylsubstituiertes Produkt aus der säurekatalysierten Reaktion von Anilin mit Formaldehyd, Mischungen der vorgenannten Amine oder Gemische mit einem Unterschuss an monofunktionellen gehinderten aromatischen Aminen, wie alkylierten Anilinen. der bevorzugt maximal 49 Äquivalentprozente beträgt. 2,6-Diisopropylanilin soll hier als bevorzugtes Beispiel angeführt werden.

Weiter bevorzugt sind auch Addukte von sterisch gehinderten, aromatischen Diaminen mit einem Unterschuss an di- oder polyfunktionellen Epoxyden, Isocyanaten, Acrylmonomeren, niedermolekularen Anhydriden, Säurechloriden, aliphatischen oder aromatischen Säuren, Acetoacetaten.

Die bevorzugten Amine sind bei Raumtemperatur flüssig oder fest. Flüssige Amine werden als unverdünnte Flüssigkeiten oder mit Weichmacher verdünnt eingesetzt, die festen als Lösung in einem Lösungsmittel oder Weichmacher. Mischungen von mehreren festen Aminen können eutektische Mischungen bilden und dadurch bei Raumtemperatur flüssig vorliegen. Diese Amine zeichnen sich in vorteilhafter Weise durch niederen Dampfdruck aus, sie sind für den gewerblichen Gebrauch toxikologisch unbedenklich.

Ihre Verwendung als Vernetzungsmittel zur Herstellung von vernetzbaren, zweikomponentigen Massen auf Basis von anhydridgruppenhaltigen Polymeren, löst die dieser Erfindung zugrundeliegende Aufgabe in besonders vorteilhafter Weise.

Polymere, die als Bindemittel die Basis dieser Zweikomponenten-Massen bilden, sind bei Raumtemperatur flüssige säureanhydridgruppenhaltige Polymere oder Copolymere und mit Molekulargewichten bis 50 000. Die Säureanhydridgruppen können statistisch oder regelmässig über das Molekül verteilt sein oder in endständiger Position. Die Einführung der Säureanhydridgruppen kann durch Copolymerisation, durch Umsetzung mit endständigen reaktiven Gruppen, durch nachfolgende Addition von ungesättigten Anhydriden an einzelne oder konjugierte Doppelbindungen, oder durch Graftreaktionen erfolgen.

Beispiele von solchen vernetzbaren Polymeren sind:
Copolymere mit olefinisch ungesättigten Monomeren, wie zum Beispiel Copolymere von Maleinsäure- oder Itaconsäureanhydrid mit Olefinen, Dienen, Vinylverbindungen, vinylaromatischen Verbindungen, Vinylestern, Vinylethern, Acryl- und Methacrylverbindungen,

Additionsprodukte von ungesättigten Anhydriden an einzelne oder konjugierte Doppelbindungen sind bevorzugt solche an Polymere des Butadiens, Isoprens, an Copolymere des Butadiens oder Isoprens mit Cyclopentadien, Styrol, Acrylnitril, Olefine mit bis zu 12 C-Atomen, an Ester ungesättigter Fettsäuren, an Terpene, oder an flüssige, ungesättigte Abbauprodukte von hochmolekularen Elastomeren, wie Naturkautschuk, Styrol-Butadienkautschuk, SBS- und SIS-Thermoplastischer-Kautschuk. Besonders bevorzugt sind Addukte von Maleinsäureanhydrid an Polymere oder Copolymere des Polybutadiens.

Die Addition des ungesättigten Anhydrids kann auch an partiell hydrierte Polymere erfolgen, respektive die Hydrierung überschüssiger Doppelbindungen kann katalytisch nach der Anhydridaddition vorgenommen werden.

Graftprodukte, die durch Addition von olefinisch ungesättigten Anhydriden an flüssige Polymere und Copolymere erhalten werden, meist unter Einwirkung von Radikalgebern, wie Peroxyden und Azoverbindungen. Besonders bevorzugt ist die Addition von ungesättigten Anhydriden an EPDM, EVA, Poly-Alpha-olefine, Acrylpolymere.

Bevorzugte flüssige säureanhydridgruppenhaltige Polymere sind auch Esteranhydride, insbesondere polymere Esteranhydride, Thioesteranhydride oder Amidanhydride von Polyhydroxylverbindungen, Polymercaptoverbindungen, von Polyaminen, mit Trimellithsäureanhydrid, Pyromellithsäuredianhydrid, Benzoltetracarbonsäure-dianhydrid, Benzophenontetracarbonsäuredianhydrid.

In vorteilhafter Weise können die Bindemittel auch Gemische der vernetzbaren Polymeren sein. Die bevorzugten flüssigen Polymere können neben Anhydridgruppen noch andere funktionelle Gruppen enthalten, zum Beispiel Alkoxysilylgruppen oder Carboxylgruppen.

Das Molekulargewicht der anhydridgruppenhaltigen flüssigen Polymere liegt im Bereich von 500 bis 50 000. Bevorzugt sind flüssige Polymere mit einem Molekulargewicht von 2000 bis 30 000, die im Mittel 1.5 bis 10, bevorzugt 1.8 bis 8 Anhydridgruppen pro Molekül enthalten. Als Säurezahl ausgedrückt weisen diese Polymeren einen Wert von 15 bis 150 mg KOH/g, bevorzugt 20 bis 100 mg KOH/g auf (bestimmt mit wasserfreier, alkoholischer Kaliumhydroxydlösung, welche zu einem Halbester führt).

Es kann von Vorteil sein, wenn die Gemische aus anhydridhaltigen Polymeren mit verschiedenem mittleren Molekulargewicht und gegebenenfalls mit unterschiedlicher Anzahl Anhydridgruppen pro Molekül bestehen. Alternativ können die Gemische aus polyfunktionellen, anhydridgruppenhaltigen Polymeren mit monofunktionellen anhydridgruppenhaltigen Polymeren bestehen, speziell mit niedermolekularen, monofunktionellen anhydridgruppenhaltigen Polymeren. Die Gemische müssen im Mittel aber mindestens 1.5 Anhydridgruppen pro Molekül enthalten.

Das stöchiometrische Verhältnis der Säureanhydrid- zu den Aminogruppen des sterisch gehinderten aromatischen Amins soll im Bereich von 3 bis 0.6, bevorzugt zwischen 2 und 0.8 liegen

Durch die Reaktion zwischen einer Säureanhydridgruppe und der Aminogruppe entsteht eine Säureamidgruppe und eine Carboxylgruppe, die eine Wasserstoffbindung zur Säureamidgruppe ausbildet. Zusammen mit den aromatischen Kernen der Amine wirken diese Vernetzungsbrücken verstärkend, wodurch sich die erfindungsgemässen Systeme von Massen nach dem Stande der Besonders bevorzugt sind erfindungsgemässe Massen, die dadurch gekennzeichnet sind, dass das Bindemittel ausgewählt ist aus der Gruppe:
Copolymere von Malein- oder Itaconsäureanhydrid mit olefinisch ungesättigten Monomeren, Additionsprodukte von ungesättigten Anhydriden an Polymere mit einzelnen oder konjugierten Doppelbindungen,
Additionsprodukte von ungesättigten Anhydriden an ungesättigte Abbauprodukte von hochmolekularen Naturkautschuken, Styrol-Butadienkautschuken oder thermoplastischen Styrol-Butadien-lsoprenkautschuken,
Additionsprodukte, welche erhalten werden durch radikalische Graftreaktionen von olefinisch ungesättigten Anhydriden an ein flüssiges Polymer,
polymeres Esteranhydrid, welches erhalten wird durch Veresterung von Polyolen mit Trimellithsäureanhydrid, Pyrromellitsäuredianhydrid, Benzoltetracarbonsäuredianhydrid, Benzophenontetracarbonsäuredianhydrid, und
Gemische dieser Bindemittel.

Technik unterscheiden. Bei höheren Konzentrationen der vernetzenden Amine, speziell solchen, die aus mehrkernigen oder kondensierten Aromaten bestehen, kommt es in vorteilhafter Weise zu einer Phasentrennung in eine starre Phase von aromatischen Säureamiden und in eine elastische Phase. Dadurch steigt die Reiss- und Weiterreissfestigkeit. Ein besonderer Vorteil der erfindungsgemässen Massen ist ihre Fähigkeit, Amidbrücken zu bilden, die ausserordentlich thermostabil und hydrolysenstabil sind. Die Substituenten in Nachbarstellung schirmen die Säureamidgruppen gegen Angriffe von Hydroxylionen oder Wasserstoffionen ab.

Tertiäre Amine katalysieren die Addition von sterisch gehinderten aromatischen Aminogruppen an Säureanhydridgruppen sehr wenig. Dies gestattet die Verwendung von primären mono-, di- oder polyfunktionellen Hydroxylverbindungen zusammen mit den erfindungsgemässen Aminen zur Vernetzung von säureanhydridgruppenhaltigen Polymeren, wobei die Reaktion der Hydroxylgruppe mit der Anhydridgruppe durch tertiäre Amine katalysiert ist. Bis maximal 49 Äquivalentprozente Hydroxylverbindungen, die bevorzugt mono-, di- oder polyfunktionelle, primäre, aliphatische Alkohole mit Äquivalentgewicht zwischen 30 und 3000 sind, können die aromatischen Amine in der Vernetzungskomponente ersetzen. Alkohole, Di- oder Polyole sind nicht nur preiswert, sondern können auch dazu dienen, feste aromatische Amine in Lösung zu bringen oder die Viskosität des Systems zu erniedrigen.

Beispiele von Alkoholen und Polyolen sind monofunktionelle, primäre Alkohole mit 2 bis 30 C-Atomen, Ethylenglykol, Diethylenglykol, niedrigmolekulare Polyethylenglykole, Butandiole, Gemische aus Butandiol, Pentandiol und Hexandiol, Polytetramethylen-etherglykole, 3-Methyl-pentandiol, flüssige Bisphenol Aethoxylate, Neopentylglykol, Cyclohexandimethanol, funktionelle Polybutadiene mit Hydroxylgruppen, N,N-bis-hydroxyethyl-aniline, Glycerin, Triethanolamin, N,N,N',N'-Tetrahydroxyethyl-ethylendiamin, N,N'-Bis-hydroxyethyl-piperazin.

Beispiele für katalytisch wirksame, tertiäre Amine, die in Mengen bis zu 2 Teilen pro 100 Teile Bindemittel/Vernetzungsmittelgemische eingesetzt werden, sind Trialkylamine, bevorzugt C12-C14-Alkyldimethylamin, Di-C12-C14-Alkyl-methylamin, N-Alkylimidazole, N,N,N',N'-Tetramethyl-ethlendiamin, Diazabicyclo-octan (Dabco) und -undecen (DBU). Auch alkalische Carbonsäuresalze sind als Katalysatoren wirksam.

Das Verfahren zur Herstellung der erfindungsgemässen Massen beinhaltet ein inniges Vermischen der beiden Komponenten und nachfolgendes Aushärten durch Vernetzen. Das Mischen und die Vernetzung erfolgt vorteilhaft bei Temperaturen zwischen 0 °C und 50 °C, bevorzugt zwischen 10 und 35 °C. Selbst bei Temperaturen im Bereich von 0 bis 15 °C läuft die Vernetzungsreaktion mit den erfindungsgemässen Aminen annähernd quantitativ innerhalb Tagesfrist ab.

Die Vermischung kann von Hand, mit dynamischen oder statischen Mischern erfolgen. Speziell bei höherviskosen, höhermolekularen Polybutadienen erweist sich die Verarbeitung mit statischen oder dynamischen Mischern von Vorteil, da damit keine Luft eingearbeitet wird.

Die Eigenschaften der vernetzten Massen können durch den Fachmann gezielt gesteuert werden und hängen u.a. vom Polymergehalt, von Anhydridgehalt des Polymers, vom Polymerisationsgrad, vom Anteil des Comonomeren, von der Funktionalität, von Verhältnis Säureanhydrid zum Amin, von der Art des Amins ab. Es resultieren sehr weiche bis harte Massen mit unterschiedlicher Zugfestigkeit, Einreissfestigkeit und Druckverformungsrest.

Einen grossen Einfluss auf verschiedene Eigenschaften der Massen in flüssigem oder vernetztem Zustand haben verschiedene Zusatzmittel, zum Beispiel:
Anorganische und organische Füllstoffe, Pigmente, Metallpulver, Farbstoffe, Russ, pyrogene Kieselsäure, kurzgeschnittene Fasern, Gummipulver, Weichmacher, Extenderöle, Bitumen, Harze, nicht-reaktive Polymere, reaktive Modifizierungsmittel, klebrigmachende Harze, Haftvermittler, Silane, Netzmittel, Silikonöle, flammhemmende Zusätze, Alterungsschutzmittel, Lichtschutzmittel, Korrosionsschutzmittel, Geruchsstoffe, fungistatisch und bakteriostatisch wirksame Stoffe, Thixotropiemittel, Treibmittel und Schaumstabilisatoren, Lösungsmittel. Die Verwendung und die Wirkung dieser Zusätze und die bevorzugten Konzentrationen sind Stand der Technik und dem Fachmann bekannt.

Die erfindungsgemässen Mischungen werden zur Herstellung von Giessmassen, Extrudiermassen, Vergussmassen, Klebmassen und Dichtmassen verwendet.

### Beispiele:

Definitionen: % bedeutet Gewichtsprozent, T bedeutet Massenteile.

Säurezahl: Die Säurezahl wurde mit methanolischer KOH bestimmt. Pro Anhydridgruppe bildet sich eine Säuregruppe und ein Methylester.

Mechanische Prüfungen: Die Reissfestigkeit wurde nach DIN 53 504, der Weiterreisswiderstand nach DIN 53 507 bestimmt. Abzugsgeschwindigkeit 100 mm/Min. Der Sekanten-Modul wurde bei 50 % Dehnung auf 100 % Dehnung extrapoliert. Die Eindruckhärte wurde mit dem Shore A-Prüfgerät bestimmt.

### Verwendete Materialien:

Flüssiges, maleinisiertes Polybutadien mit 9.09 % Maleinsäureanhydrid, Säurezahl 54 mg KOH/g, (Lithene LX16-10MA, Mn 8800; resp. N4-5000-10MA, Mn 5250; Revertex Ldt. UK-Harlow)

Flüssiges, maleinisiertes Polybutadien mit 4.76 % Maleinsäureanhydrid,
Säurezahl 28 mg KOH/g, (Lithene LX16-5MA, Mn 8800; resp. Lithene N4-5000-5MA, Mn 5250; Revertex Ltd. UK-Harlow)

Flüssiges, mittels Graftreaktionen maleinisiertes EPDM, Mn 2600, Säurezahl 28 mg KOH/g (Lucant A 5560 / Mitsui Petrochemical Ind., Japan)

Weichmacher 2-Ethylhexyl-benzyl-phthalat (Santicizer 261 / Monsanto Europe SA, B-Brussels)

Weichmacher Diisopropyl-diphenyl (Sure Sol 300 / Koch Chem. Co., Corpus Christi TX USA)

Ethoxyliertes Bisphenol A, OH-Zahl 272 mg KOH/g, (Dianol, AKZO Chem. Div. NL-Amsterdam)

3,3',5,5'-Tetraisopropyl-4,4'-diaminodiphenylmethan, Aminzahl 306 mg KOH/g, (M-DIPA, Lonza AG, CH-Basel)

C12-C14-Alkyldimethylamin (BASF AG, D-Ludwigshafen)

Kreide, Korngrösse 0 - 4 µm (Omya H95T, Plüss-Stauffer AG, CH-Oftringen)
Kreide, Korngrösse 0 - 25 µm (Omya BLR3, Plüss-Stauffer AG, CH-Oftringen)

### Verfahren:

- Komponente A =: Maleinisiertes Polymer mit Zuschlagstoffen
- Komponente B =: Weichmacher, mit gelöster Vernetzerkomponente, gegebenenfalls zusätzlich mit Katalysator.

Die Komponenten A und B wurden bei Raumbedingungen homogen vermischt und innerhalb von 10 Minuten Platten von 3 mm gegossen. Die mechanischen Werte wurden an den resultierenden vernetzten Massen nach einer Lagerung von mindestens 10 Tagen bei Raumbedingungen bestimmt.

### Tabelle 1

Vernetzte Massen unter Verwendung von erfindungsgemässen, sterisch gehinderten, aromatischen Aminen als Vernetzungsmittel (Versuche 2 - 4, Versuche 6 und 7) , im Vergleich zu Vernetzungsmitteln nach den Stande der Technik (Versuch 1 und 5). Verhältnis: Anhydridgruppe zu Hydroxyl- resp. Amingruppe = 1. Vermischen der Komponenten und Vernetzung bei Raumbedingungen.

**Tabelle 1**

| **Versuch Nr.** | | **1** | **2** | **3** | **4** | **5** | **6** | **7** |
|---|---|---|---|---|---|---|---|---|
| Komponente A | | | | | | | | |
| 1) | Lithene LX16-5MA | 500 | 500 | | | 500 | 500 | |
| 2) | Lithene N4-5000-5MA | | | 1000 | | | | |
| 3) | Lithene N4-5000-10MA | 500 | 500 | | | 500 | 500 | |
| 4) | Lucant A 5560 | | | | 1000 | | | 1000 |
| 5) | Sure Sol 300 | 375 | 353 | 375 | 375 | 344 | 353 | 375 |
| 6) | Kreide Omya H95T | 666 | 666 | 666 | 666 | | | |
| 7) | Kreide Omya BLR3 | 933 | 933 | 933 | 933 | | | |
| | | | | | | | | |

| Komponente B | | | | | | | | |
|---|---|---|---|---|---|---|---|---|
| 8) | Santicizer 261 | 148 | 132 | 93 | 93 | 148 | 132 | 93 |
| 9) | Ethoxyliertes | 148 | 148 | | | 148 | | |

| Bisphenol A | | | | | | | | |
|---|---|---|---|---|---|---|---|---|
| 10) | M-DIPA | | 32 | 93 | 93 | | 132 | 93 |
| 11) | Alkyldimethylamin | 30 | | | | 30 | | |
| | | | | | | | | |
| Summe in Massenteilen | | 3300 | 3216 | 3160 | 3160 | 1670 | 1617 | 1561 |
| | | | | | | | | |
| Topfzeit, Minuten | | 45 | 35 | 40 | 30 | 50 | 40 | 35 |
| | | | | | | | | |
| Härte Shore A | | 41 | 58 | 27 | 44 | 14 | 40 | 32 |
| Reissfestigkeit N/mm2 | | 0.75 | 1.75 | 0.80 | 0.90 | 0.22 | 0.68 | 0.55 |
| Modul 50 % | | 0.60 | 1.30 | 0.23 | 0.70 | 0.20 | 0.50 | 0.50 |
| Reissdehnung % | | 64 | 102 | 285 | 89 | 75 | 77 | 65 |
| Weiterreisswiderstand N/mm | | 0.52 | 1.96 | 0.83 | 0.56 | 0.19 | 1.62 | 0.36 |

Ergebnis der Versuche: Vernetzte Massen mit den erfindungsgemässen Vernetzern auf Basis der sterisch gehinderten, aromatischen Amine, zeigen wesentlich höhere mechanische Festigkeiten als Massen mit Vernetzern nach dem Stande der Technik.

## Patentansprüche

1. Vernetzbare, zweikomponentige Masse auf Basis von Säureanhydridgruppen aufweisenden flüssigen Polymeren mit einem Molekulargewicht von 500 bis 50 000 als Bindemittel, die als Vernetzungsmittel mindestens ein aromatisches Amin, Diamin oder Polyamin enthält, das in den Nachbar- oder Ortho-stellungen zur Aminogruppe substituiert ist, wobei das Verhältnis von Säureanhydridgruppen des Bindemittels zu den Aminogruppen des Vernetzungsmittels im Bereiche von 3 bis 0,6 liegt.

2. Masse nach Anspruch 1, dadurch gekennzeichnet, dass das sterisch gehinderte, aromatische Amin ein Di- oder Polyamin ist, das in Nachbar- oder ortho-Stellungen zu den Stickstoffatomen Substituenten trägt, die aus der Gruppe der linearen oder verzweigten C1- bis C4-Alkylgruppen ausgewählt sind.

3. Masse nach Anspruch 2, dadurch gekennzeichnet, dass das sterisch gehinderte aromatische Diamin oder Polyamin ein Derivat eines mehrkernigen oder kondensierten Aromaten ist.

4. Masse nach Anspruch 1 bis 3, dadurch gekennzeichnet, dass das sterisch gehinderte, aromatische Amin ausgewählt ist aus der Gruppe 1,3,5-Trimethyl-2,4-diaminobenzol, 1-Methyl-3,5-diethyl-2,4-diaminobenzol, 1-Methyl-3,5-diethyl-2,6-diaminobenzol, 1,3,5-Triethyl-2,4-diaminobenzol, 2,3,5,6-Tetramethyl-1,4- diaminobenzol, 3,3',5,5'-Tetramethyl-4,4'-diaminodiphenylmethan, 3,3',5,5'-Tetraethyl-4,4'-diaminodiphenylmethan, 3,3',5,5'-Tetraisopropyl-4,4'-diaminodiphenyl-methan, 3,3'-Dimethyl-5,5'-diethyl-4,4'-diaminodiphenylmethan, 3,3'-Dimethyl-5,5'-diisopropyl-4,4'-diaminodiphenylmethan, 3,3'-Diethyl-5,5'-diisopropyl-4,4'-diaminodiphenylmethan, in beiden Orthostellungen zu den Amingruppen alkylsubstituiertes Produkt aus der säurekatalysierten Reaktion von Anilin mit Formaldehyd, und deren Mischungen.

5. Masse nach Anspruch 1 bis 4, dadurch gekennzeichnet, dass das aromatische Amin bis 49 Äquivalentprozente von monofunktionellen, gehinderten, aromatischen Aminen mitenthält, wobei 2,6-Di-isopropylanilin bevorzugt ist.

6. Masse nach Anspruch 1 bis 5, dadurch gekennzeichnet, dass das Bindemittel ausgewählt ist aus der Gruppe Copolymere von Malein- oder Itaconsäureanhydrid mit olefinisch ungesättigten Monomeren, Additionsprodukte von ungesättigten Anhydriden an Polymere mit einzelnen oder konjugierten Doppelbindungen, Additionsprodukte von ungesättigten Anhydriden an ungesättigte Abbauprodukte von hochmolekularen Naturkautschuken, Styrol-Butadienkautschuken oder thermoplastischen Styrol-Butadien-Isoprenkautschuken, Additionsprodukte, welche erhalten werden durch radikalische Graftreaktionen von olefinisch ungesättigten Anhydriden an ein flüssiges Polymer, polymeres Esteranhydrid, welches erhalten wird durch Veresterung von Polyolen mit Trimellithsäureanhydrid, Pyromellithsäuredianhydrid, Benzoltetracarbonsäuredianhydrid, Benzophenontetracarbonsäuredianhydrid, und Gemische dieser Bindemittel.

7. Masse nach Anspruch 1 bis 6, dadurch gekennzeichnet, dass das Bindemittel ein Addukt von Maleinsäureanhydrid an Polymere oder Copolymere des Polybutadiens ist.

8. Masse nach Anspruch 6 und 7, dadurch gekennzeichnet, dass das Bindemittel ein Gemisch von polyfunktionellen und monofunktionellen anhydridgruppenhaltigen Polymeren, mit einem mittleren Gehalt von wenigstens 1.5 Anhydridgruppen pro Polymermolekül ist.

9. Masse nach Anspruch 1 bis 8, dadurch gekennzeichnet, dass das Bindemittel neben Anhydridgruppen noch andere funktionelle Gruppen enthält.

10. Masse nach Anspruch 1 bis 9, dadurch gekennzeichnet, dass maximal 49 Äquivalentprozente des sterisch gehinderten, aromatischen Amins durch einen mono-, di- oder polyfunktionellen, primären, aliphatischen Alkohol mit Äquivalentgewicht von 30 bis 3000 ersetzt sind.

11. Masse nach Anspruch 10, dadurch gekennzeichnet, dass die Masse bezogen auf 100 Massenteile Binde- und Vernetzungsmittel bis 2 Massenteile eines tertiären Amins als Katalysator enthält.

12. Masse nach Anspruch 1 bis 11, dadurch gekennzeichnet, dass sie als Zusatzstoffe anorganische und organische Füllstoffe, Pigmente, Metallpulver, Farbstoffe, Russ, pyrogene Kieselsäure, kurzgeschnittene Fasern, Gummipulver, Weichmacher, Extenderöle, Bitumen, Harze, nicht-reaktive Polymere, reaktive Modifizierungsmittel, klebrigmachende Harze, Haftvermittler, Silane, Netzmittel, Silikonöle, flammhemmende Zusätze, Alterungsschutzmittel, Lichtschutzmittel, Korrosionsschutzmittel, Geruchsstoffe, fungistatisch und bakteriostatisch wirksame Stoffe, Thixotropiemittel, Treibmittel und Schaumstabilisatoren, Lösungsmittel enthält.

13. Verfahren zur Herstellung von Massen gemäss den Ansprüchen 1 bis 12, dadurch gekennzeichnet, dass man die Bestandteile homogen vermischt und bei Temperaturen zwischen 0 und 50 °C, bevorzugt bei Temperaturen zwischen 10 und 35 °C, aushärten lässt.

14. Verwendung von sterisch gehinderten aromatischen Aminen als Vernetzungsmittel zur Herstellung von vernetzbaren zweikomponentigen Massen auf Basis von Säureanhydridgruppen aufweisenden flüssigen Polymeren.

15. Verwendung der Massen gemäss den Ansprüchen 1 bis 12 zur Herstellung von Giessmassen, Extrusionsmassen, Vergussmassen, Klebmassen und Dichtmassen.

## Claims

1. Crosslinkable, two component composition based on liquid polymers, containing acid anhydride groups and having a molecular weight of from 500 to 50000, as binders, which comprises as crosslinker at least one aromatic amine, diamine or polyamine which is substituted in the neighbouring or ortho positions to the amino group, the ratio of acid anhydride groups of the binder to the amino groups of the crosslinker being in the range from 3 to 0.6.

2. Composition according to claim 1, characterized in that the sterically hindered aromatic amine is a di- or polyamine which, in neighbouring or ortho positions to the nitrogen atoms, comprises substituents which are selected from the group of linear or branched C1- to C4-alkyl groups.

3. Composition according to claim 2, characterized in that the sterically hindered aromatic diamine or polyamine is a derivative of a polycyclic or condensed aromatic compound.

4. Composition according to claim 1 to 3, characterized in that the sterically hindered aromatic amine is selected from the group 1,3,5-trimethyl-2,4-diaminobenzene, 1-methyl-3,5-diethyl-2,4-diaminobenzene, 1-methyl-3,5-diethyl-2,6-diaminobenzene, 1,3,5-triethyl-2,4-diaminobenzene, 2,3,5,6-tetramethyl-1,4-diaminobenzene, 3,3',5,5'-tetramethyl-4,4'-diaminobiphenylmethane, 3,3',5,5'-tetraethyl-4,4'-diaminodiphenylmethane, 3,3',5, 5'-tetraisopropyl-4,4'-diaminodiphenylmethane, 3,3'-dimethyl-5,5'-diethyl-4,4'-diaminodiphenylmethane, 3,3'-dimethyl-5,5'-diisopropyl-4,4'-diaminodiphenylmethane, 3,3'-diethyl-5,5'-diisopropyl-4,4'-diaminodiphenylmethane, the product of the acid-catalysed reaction of aniline with formaldehyde, said product being alkyl-substituted in both ortho positions to the amine groups, and mixtures thereof.

5. Composition according to claim 1 to 4, characterized in that the aromatic amine also contains up to 49 equivalent percent of monofunctional, hindered aromatic amines, 2,6-di-isopropylaniline being preferred.

6. Composition according to claim 1 to 5, characterized in that the binder is selected from the group of copolymers of maleic or itaconic anhydride with olefinically unsaturated monomers, addition products of unsaturated anhydrides on polymers with individual or conjugated double bonds, addition products of unsaturated anhydrides on unsaturated decomposition products of high molecular weight natural rubbers, styrene butadiene rubbers or thermoplastic styrene butadiene isoprene rubbers, addition products which are obtained by radical graft reactions of olefinically unsaturated anhydrides on a liquid polymer, polymeric ester anhydride which is obtained by esterification of polyols with trimellitic anhydride, pyromellitic dianhydride, benzenetetracarboxylic dianhydride, benzophenonetetracarboxylic dianhydride, and mixtures of these binders.

7. Composition according to claim 1 to 6, characterized in that the binder is an adduct of maleic anhydride on polymers or copolymers of polybutadiene.

8. Composition according to claim 6 and 7, characterized in that the binder is a mixture of polyfunctional and monofunctional polymers containing anhydride groups with an average content of at least 1.5 anhydride groups per polymer molecule.

9. Composition according to claim 1 to 8, characterized in that the binder contains, in addition to anhydride groups, other functional groups.

10. Composition according to claim 1 to 9, characterized in that a maximum of 49 equivalent percent of the sterically hindered aromatic amine is replaced by a mono-, di- or polyfunctional, primary, aliphatic alcohol with an equivalent weight of 30 to 3000.

11. Composition according to claim 10, characterized in that the composition, in relation to 100 parts by mass of binder and crosslinker, contains up to 2 parts by mass of a tertiary amine as catalyst.

12. Composition according to claim 1 to 11, characterized in that it comprises, as additives, inorganic and organic fillers, pigments, metal powders, dyes, carbon black, pyrogenic silica, short- chopped fibres, powdered rubber, plasticizers, extender oils, bitumen, resins, non-reactive polymers, reactive modifying agents, tackifying resins, adhesion promoters, silanes, wetting agents, silicone oils, flame-retarding additives, antiageing agents, light stabilizers, anti-corrosion agents, scents, fungistatic and bacteriostatic agents, thixotropic agents, blowing agents and foam stabilizers and solvents.

13. Process for preparing compositions according to claims 1 to 12, characterized in that the components are homogeneously mixed and are allowed to cure at temperatures between 0 and 50°C, preferably at temperatures between 10 and 35°C.

14. Use of sterically hindered aromatic amines as crosslinkers for the preparation of crosslinkable two component compositions based on liquid polymers containing acid anhydride groups.

15. Use of the compositions according to claims 1 to 12 for the preparation of costing compounds, extrusion compounds, potting compounds, adhesives and sealants.

## Revendications

1. Composition réticulable à deux composants, à base de polymères liquides comportant des groupes anhydride d'acide ayant une masse moléculaire de 500 à 50000, servant de liant, contenant en tant qu'agent de réticulation au moins une amine, diamine ou polyamine aromatique, qui est substituée en positions voisine ou ortho par rapport au groupe amino, le rapport des groupes anhydride d'acide du liant aux groupes amino de l'agent de réticulation étant compris entre 3 et 0,6.

2. Composition selon la revendication 1, caractérisée en ce que l'amine aromatique à empêchement stérique est une diamine ou une polyamine qui porte sur les positions voisines ou ortho des atomes d'azote des substituants qui sont choisis dans l'ensemble comprenant les groupes alkyle en C₁-C₄ à chaîne droite ou ramifiée.

3. Composition selon la revendication 2, caractérisée en ce que la diamine ou la polyamine aromatique à empêchement stérique est un dérivé d'un produit aromatique polycyclique ou condensé.

4. Composition selon les revendications 1 à 3, caractérisée en ce que l'amine aromatique à empêchement stérique est choisie dans le groupe comprenant :
le 1,3,5-triméthyl-2,4-diaminobenzène, le 1-méthyl-3,5-diéthyl-2,4-diaminobenzène, le 1-méthyl-3,5-diéthyl-2,6-diaminobenzène, le 1,3,5-triéthyl-2,4-diaminobenzène, le 2,3,5,6-tétraméthyl-1,4-diaminobenzène, le 3,3',5,5'-tétraméthyl-4,4'-diaminodiphénylméthane, le 3,3',5,5'-tétraéthyl-4,4'-diaminodiphénylméthane, le 3,3',5,5'-tétraisopropyl-4,4'-diaminodiphénylméthane, le 3,3'-diméthyl-5,5'-diéthyl-4,4'-diaminodiphénylméthane, le 3,3'-diméthyl-5,5'-diisopropyl-4,4'-diaminodiphényl-méthane, le 3,3'-diéthyl-5,5'-diisopropyl-4,4'-diamino-diphénylméthane, le produit de réaction de l'aniline avec le formaldéhyde, catalysée par un acide, catalysée par un acide, lequel produit est alkylé sur les deux positions ortho par rapport aux groupes amino, de la réac-tion, catalysée par un acide, de l'aniline avec le formaldéhyde, et leurs mélanges.

5. Composition selon les revendications 1 à 4, caractérisée en ce que l'amine aromatique contient jusqu'à 49 % en équivalents d'amines aromatiques monofonctionnelles à empêchement stérique, de préférence la 2,6-diisopropylaniline.

6. Composition selon les revendications 1 à 5, caractérisée en ce que le liant est choisi dans le groupe comprenant les copolymères de l'anhydride maléique ou de l'anhydride itaconique avec des monomères à insaturation oléfinique, des produits d'addition d'anhydrides insaturés sur des polymères comportant des doubles liaisons uniques ou conjuguées, des produits d'addition d'anhydrides insaturés sur des produits de dégradation insaturés de caoutchoucs naturels de haut poids moléculaire, de caoutchoucs styrène-butadiène ou de caoutchoucs styrène-butadiène-isoprène thermoplastiques, des produits d'addition que l'on obtient par des réactions de greffage radicalaire d'anhydrides à insaturation oléfinique sur un polymère liquide, l'anhydride d'ester polymère, que l'on obtient par estérification de polyols avec l'anhydride trimellitique, le dianhydride pyromellitique, le dianhydride benzènetétracarboxylique, le dianhydride benzophénonetétracarboxylique et les mélanges de ces liants.

7. Composition selon les revendications 1 à 6, caractérisée en ce que le liant est un produit d'addition de l'anhydride maléique sur des polymères ou des copolymères du polybutadiène.

8. Composition selon les revendications 6 et 7, caractérisée en ce que le liant est un mélange de polymères polyfonctionnels et monofonctionnels contenant des groupes anhydride, avec une teneur moyenne d'au moins 1,5 groupes anhydride par molécule de polymère.

9. Composition selon les revendications 1 à 8, caractérisée en ce que le liant contient encore, outre des groupes anhydride, d'autres groupes fonctionnels.

10. Composition selon les revendications 1 à 9, caractérisée en ce qu'au maximum 49 % en équivalent de l'amine aromatique à empêchement stérique sont remplacés par un alcool aliphatique primaire mono-, di- ou poly-fonctionnel ayant une masse équivalente de 30 à 3000.

11. Composition selon la revendication 10, caractérisée en ce que la composition contient, pour 100 parties en masse de liants et d'agents de réticulation, jusqu'à 2 parties en masse d'une amine tertiaire en tant que catalyseur.

12. Composition selon les revendications 1 à 11, caractérisée en ce qu'elle contient en tant qu'additifs des charges minérales et organiques, des pigments, des poudres métalliques, des colorants, du noir de carbone, de la silice pyrogène, des fibres coupées, du caoutchouc en poudre, des plastifiants, des huiles de dilution, du bitume, des résines, des polymères non réactifs, des modifiants réactifs, des résines tackifiantes, des promoteurs d'adhérence, des silanes, des agents de réticulation, des huiles de silicone, des additifs d'ignifuga-tion, des agents de protection contre le vieillissement, des agents photoprotecteurs, des agents de protection contre la corrosion, des arômes, des matières actives fongistatiques et bactériostatiques, des agents de thixotropisation, des propulseurs et des stabilisants de mousse, des solvants.

13. Procédé pour préparer des compositions selon les revendications 1 à 12, caractérisé en ce qu'on mélange jusqu'à homogénéité les constituants, et on les laisse durcir à des températures comrpises entre 0 et 50°C, de préférence à des températures comprises entre 10 et 35°C.

14. Utilisation d'amines aromatiques à empêchement stérique en tant qu'agent de réticulation pour préparer des compositions réticulables à deux composants à base de polymères liquides comportant des groupes anhydride d'acide.

15. Utilisation des compositions selon les revendications 1 à 12 pour préparer des mélanges à couler, des compositions pour extrusion, des matières isolantes, des matières adhésives et des compositions d'étanchéité.
